Europäisches Patentamt

European Patent Office

Office européen des brevets

(11) Publication number: **0 563 897 A1**

# EUROPEAN PATENT APPLICATION

(21) Application number: 93105276.5

(22) Date of filing: **30.03.93**

(51) Int. Cl.5: **G01N 21/89**

(30) Priority: **30.03.92 JP 103542/92**
**30.03.92 JP 103543/92**
**30.03.92 JP 103544/92**

(43) Date of publication of application:
**06.10.93 Bulletin 93/40**

(84) Designated Contracting States:
**DE FR GB NL**

(71) Applicant: **FUJI PHOTO FILM CO., LTD.**
**210 Nakanuma**
**Minami-Ashigara-shi**
**Kanagawa(JP)**

(72) Inventor: **Okamura, Koki, c/o Fuji Photo Film**
**Co.,Ltd.**
**798, Miyanodai,**
**Kaiseimachi**
**Ashigarakami-gun, Kanagawa(JP)**
Inventor: **Shiimori, Yoshiko, c/o Fuji Photo**
**Film Co.,Ltd.**
**798, Miyanodai,**
**Kaiseimachi**
**Ashigarakami-gun, Kanagawa(JP)**

(74) Representative: **Patentanwälte Grünecker,**
**Kinkeldey, Stockmair & Partner**
**Maximilianstrasse 58**
**D-80538 München (DE)**

(54) **Defect inspection system.**

(57) A defect inspection system in which defect-containing regions are extracted from the binarized image of the inspected material and the kind, pattern and degree of each defect are precisely discriminated. The system comprises an address detector for determining the address of the defect, a binarizer for binarizing the differentiated image and a defect region extractor for extracting a region containing the address of the defect from the binarized image to transform the values of the picture elements in the defect-containing region into the value which indicates the defect. The binarized image is obtained by the binarizer while comparing each picture element of the differentiated image with the third threshold (TH3), which is determined by referring to the first threshold (TH2) calculated from the histogram of the densities of all differentiated image and the second threshold (TH2) calculated from the average density of the picture elements surrounding each target picture element. Also provided is a system in which the binarized image is segmented into plural defect-containing regions so as to make it possible to discriminate the feature of respective defects. A neural network may be used for the discrimination of the feature of the detected defect.

FIG.1

EP 0 563 897 A1

## BACKGROUND OF THE INVENTION:

### Field of the Invention;

The present invention relates generally to a defect inspection system for automatically detect the presence of any defects on a test piece to be inspected by scanning the surface thereof to obtain image signals which are processed electronically, and more particularly to such a defect inspection system by which areas or regions containing any defects are dividedly extracted and the kind and degree of each defect are precisely discriminated.

According to another aspect of the invention, it relates to a defect inspection system in which the image signals obtained by scanning the surface of the test piece are processed to divide or segment each binarized image into plural areas each containing at least one defect so as to make it possible to discriminate the kinds and other charactererizing parameters of respective defects.

According to a further aspect of the invention, it relates to such a defect inspection system in which the image signals obtained by scanning the surface of the test piece are analyzed to discriminate the shapes (or patterns) and grades of respective defects.

### Prior Art:

A defect inspection system has been known in the art, in which the surface of a test piece, such as a steel plate, plastics film or paper sheet, is optically scanned to detect any defect on or internally of the inspected test piece. Generally in the prior art systems, the image signals obtained by scanning the surface of the test piece are compared with a pre-set threshold to estimate the presence of any defects when the image signals exceeds the threshold or they are less than the threshold. (See, for example, the specification of our copending United States Patent Appln. Serial No. 07/760,427 which corresponds to EP 0475454A.)

Another type system, by which the shape, kind and other features of the detected defects can be discriminated, has also been proposed. In an exemplified system of this type, the image signals obtained by scanning the surface of the inspected test piece are subjected to a step of discriminating the peaks of respective image signal waves to know whether the peaks reach a pre-set level or not, and then characterizing parameters or features are determined from each area containing any defect to judge species and grades of respective defects.

However, for instance, it becomes hard to detect a defect having a low density in the defect-containing area in this preceedingly proposed system, leading to extreme difficulty in determination of the features of the defect.

In a system which has been proposed by a further different proposal, each of the binarized images obtained from the inspected material is projected in a certain direction to know the marginal distribution (i.e. the projection) from which the feature of the defect are estimated to discriminate the defect.

It is essential to estimate the features of defects independently for every one defect. However, there is often a case where plural defects are contained in one image so that the plural defects are projected on the same marginal distribution to make it impossible to separate the features of respective defects, leading to the problem that the shapes and kinds of these defects cannot be discriminated precisely.

A further modified method has been devised, in which every areas each containing one defect are divided or segmented independently to cope with the case where a certain image contains plural defects. However, a problem arises even in this method such that a linear defect, which is contiguous in substance, might be extracted as if it were separate defects to have independent features when it is extracted interruptedly under the influence of a noise or other confusing factors, leading to the result that the shapes or patterns and kinds of these defects cannot be discriminated precisely.

A further modified system has been proposed, in which a discrimination logic is constructed to be used for the discrimination of defects, the discrimination logic being constructed on the basis of the features or characterizing parameters of the defects.

However, in this system of prior-made proposal, the discrimination logic for the discrimination of each defect with reference to features of the defects must be constructed by the operator through the try-and-error method, and hence the construction of pertinent logic requires a great deal of labours and time.

## OBJECTS AND SUMMARY OF THE INVENTION:

Accordingly, a first object of the invention is to provide an automated defect inspection system for detecting any defects on a test piece to be inspected, wherein regions each containing at least one defect

3

are extracted so that the shapes, patterns, grades or other features of respective defects can be discriminated precisely.

A second object of the invention is to provide such a defect inspection system, wherein a binarized image containing plural defects is segmented into plural areas or regions each containing one defect so that the shapes, patterns, grades or other features of defects contained in respective segmented areas can be discriminated precisely.

A third object of the invention is to provide a defect inspection system wherein a pertinent defect discrimination algorithm can be established within a short time by learning while using training data.

The first object of the invention is attained by the provision of a defect inspection system for extracting a region containing at least one defect from an image of an inspected material by analyzing the differentiated image, said differentiated image being composed of differentiated image signals which are obtained by scanning said inspected material and then differentiated by using a spatial filter including a differentiation filter, comprising:

(a) an address detector for determining the address of said defect by referring to the differentiated image signal;

(b) a binarizer for binarizing each picture element of the differentiated image by comparing said each picture element with the third threshold (TH3), which is determined by referring to the first threshold (TH1) calculated from the histogram of the densities of all picture elements in the differentiated image and the second threshold (TH2) calculated from the average density of the picture elements surrounding said each target picture element; and

(c) a defect region extractor for extracting a region containing the address of the detected defect from the binarized image of the inspected material by transforming the value of the picture element in the region into the value which indicates the defect.

Meanwhile, the third threshold TH3 is determined by substitute the first threshold TH1 and the second threshold TH2 in the following equation of:

$$TH3 = TH2 - k(TH1 - TH2); \text{ wherein } \underline{k} \text{ is a constant.}$$

The pattern of the defect may be modified either by subjecting the binarized image to contraction processing along the main or subsidiary scanning direction or by subjecting the extracted region, which is extracted and smeared by the defect region extractor, to at least one of expansion, fill-up (or hole-filling) and contraction processings.

The second object of the invention is attained by the provision of a defect inspection system for extracting and inspecting a binarized image containing therein plural defects from an image of an inspected material, said binarized image being obtained by scanning said inspected material, differentiated using a spatial filter including a differentiation filter and then binarized, comprising:

segmentation means for segmenting said binarized image into plural defect-containing areas each containing at least one defect.

It is desirous that the binarized image used herein is a separated image which has been obtained by smearing the areas containing the addresses of defects detected by separate means to be separated from other areas.

The marginal distribution information is the projection of the binarized image projected in the subsidiary or main scanning direction, and a certain independent area having linearity may be segmented to be an area containing a linear defect. The segmenting operation may be repeated to segment the areas which have been once discriminated as non-linear, so that one area may be segmented or divided into plural smaller areas.

The third object of the invention is attained by the provision of a defect inspection system for extracting a region containing therein at least one defect by analyzing the differentiated image, said differentiated image being composed of differentiated image signal which is obtained by scanning said inspected material and then differentiated by using a spatial filter including a differentiation filter, the thus extracted region being discriminated to be classified into one of plural shape pattern categories each defined to include defects of specific characteristics, comprising:

(a) determination means for determining the feature of the defect including at least the length, width and area of the defect; and

(b) a neural network for receiving the output from said determination means to discriminate the pattern of thedefect to classify the defect into one of plural pattern categories.

In brief, according to this aspect of the invention, a neural network is used for the pattern discrimination of each defect. The neural network may be composed of a three-layer construction including:

an input layer having a specific number of input units, the number of the input units being equal to the dimension number of the feature vectors having the vector components each indicating one of the features including at least length, width and area;

a hidden (or intermediate) layer having a specific number of hidden (or intermediate) units, the number of the hidden units being equal to the number of discriminant planes necessary for the classification of the patterns of the defects into the plural pattern categories within the feature space defined by the feature vectors; and

an output layer having a specific number of output units, the number of the output units being equal to the number of said plural pattern categories.

A neural network may also be used for the discrimination of the grade of the defect. In such an embodiment, the neural network may be composed of a three-layer construction including:

an input layer having a specific number of input units, the number of said input unit being equal to the dimension number of the feature vectors having the vector components each indicating one of the features including at least the area and density information of the defect;

a hidden (or intermedite) layer having a specific number of hidden units, the number of the hidden units being equal to the number of discriminant planes necessary for the classification of the grades of the defects into the plural grade categories within the feature space defined by the feature vectors; and

an output layer having a specific number of output units, the number of the output units being equal to the number of the plural grade categories.

The training signal may be calculated by the use of a membership function at the learning step of the neural network. After the learning step, the certainty thus obtained from the membership function may be added as the training signal to the results of discrimination of categories concerning the patterns or grades of the defect.

BRIEF DESCRIPTION OF THE DRAWINGS:

The above and other objects and advantages of the present invention will become apparent from the following description of presently preferred embodiments thereof while referring to the appendend drawings, in which:

Fig. 1 is a schematic illustration including a block diagram showing the operation sequence of a first embodiment of the invention;

Fig. 2 is a block diagram showing the part of the operation sequence shown in Fig. 1 more in detail;

Fig. 3 is a graphic representation showing an exemplified method of determining the threshold TH1;

Fig. 4 is an illustration given for the description of the method of determining the threshold TH2;

Figs. 5A to 5C are graphic illustrations showing the method of determining the threshold TH3;

Fig. 6 is an illustration showing the algorithm of the vertical contraction;

Fig. 7 is an illustration showing the concept of the vertical contraction;

Fig. 8 is an illustration showing the algorithm of area extraction;

Fig. 9 is an illustration showing the defect-containing region extraction processing;

Fig. 10 is an illustration showing the algorithm of expansion;

Fig. 11 is an illustration showing the fill-up processing;

Fig. 12 is an illustration showing the algorithm of contraction;

Fig. 13 is an illustration showing the steps of modifying the pattern of a defect image;

Fig. 14 is a schematic illustration showing the concept of marginal projection;

Fig. 15 is a schematic illustration showing the first step of segmentation of the binarized image;

Fig. 16 is a schematic illustration showing the second step of segmentation of the binarized image;

Fig. 17 is a schematic illustration showing the third step of segmentation of the binarized image;

Fig. 18 is a flow chart showing the operation sequence of the segmentation processing;

Fig. 19 shows views (A) to (D) each indicating one feature which may be used as a parameter for characterizing each defect;

Fig. 20 shows a method of determining the average density;

Fig. 21 is a graphic representation showing the distribution of categories relating to the shape or pattern of each defect;

Fig. 22 shows one example of the neural network for the discrimination of the shape or pattern of each defect;

Fig. 23 is a diagrammatical illustration showing the interrelationship between the input, hidden and output units;

Fig. 24 is a graph showing a sigmoid function which is an examplified output function;

Figs.25A to 25C show details of the decision trees;

Fig. 26 is a graphic representation showing the distribution of the grade categories;

Fig. 27 is a diagrammmatical illustration showing one example of the neural network for discriminating the grades;

Fig. 28 is a graphic representation showing an example of the membership function; and

Fig. 29 is a diagrammmatic illustration showing the training signals which are given in terms of certainty.

## DESCRIPTION OF PREFERRED EMBODIMENTS:

### First Embodiment:

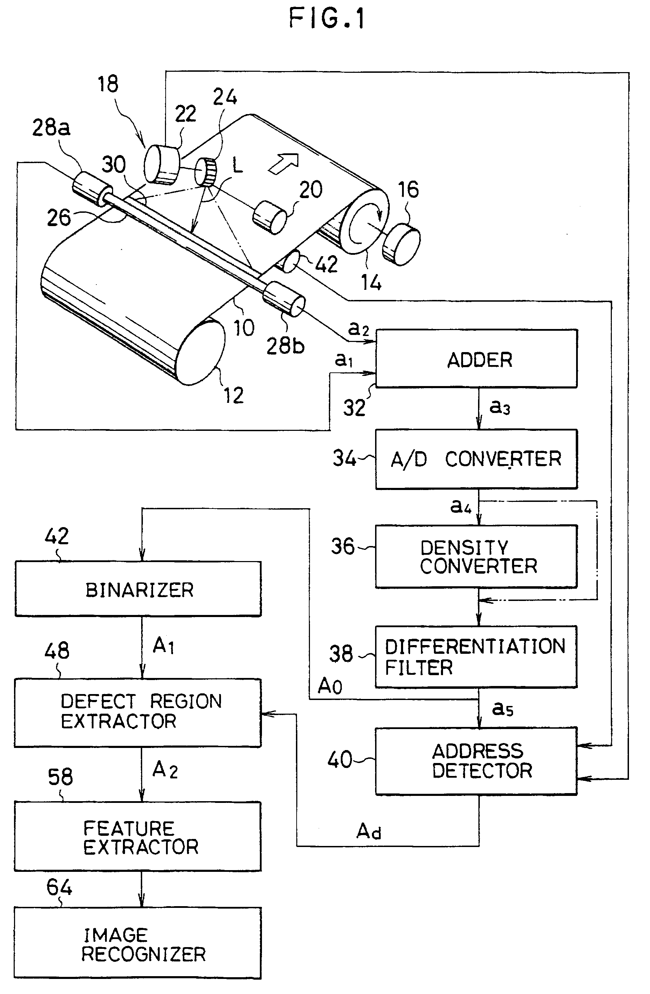

The present invention will now be described in detail while referring to presently preferred embodiments thereof. Initially referring to Figs. 1 to 5, a first embodiment of the invention will be described.

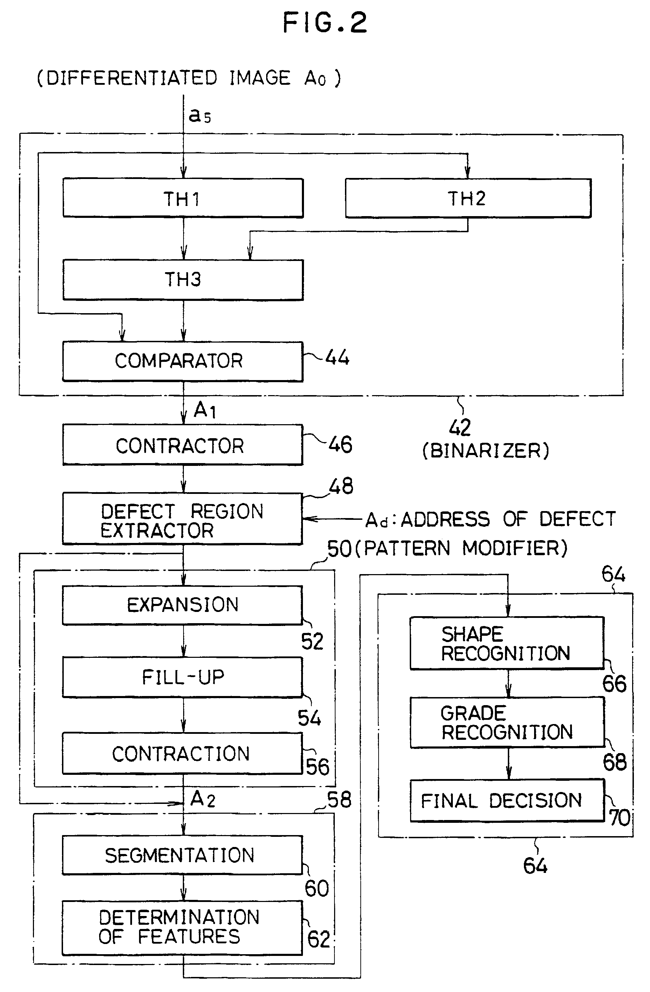

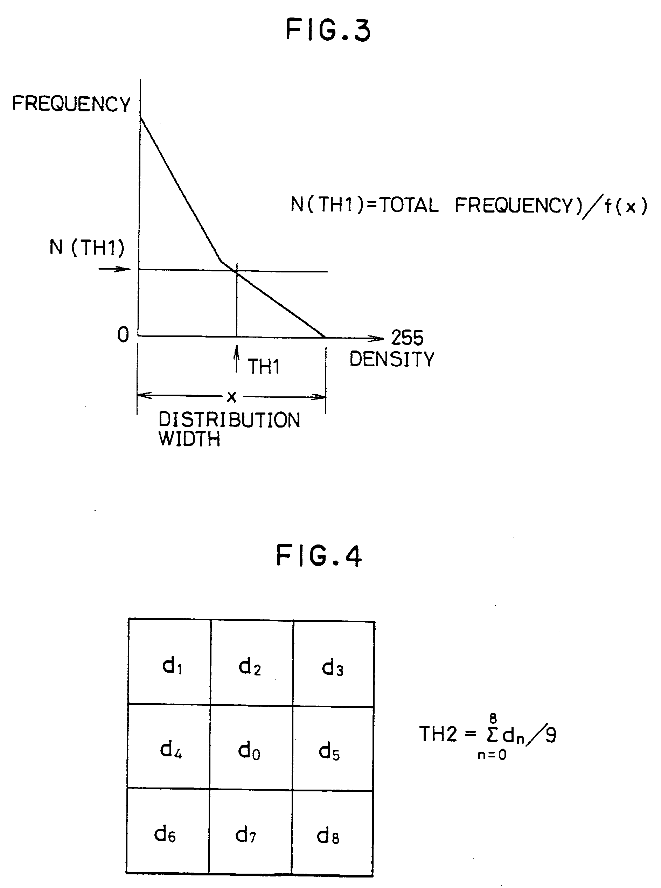

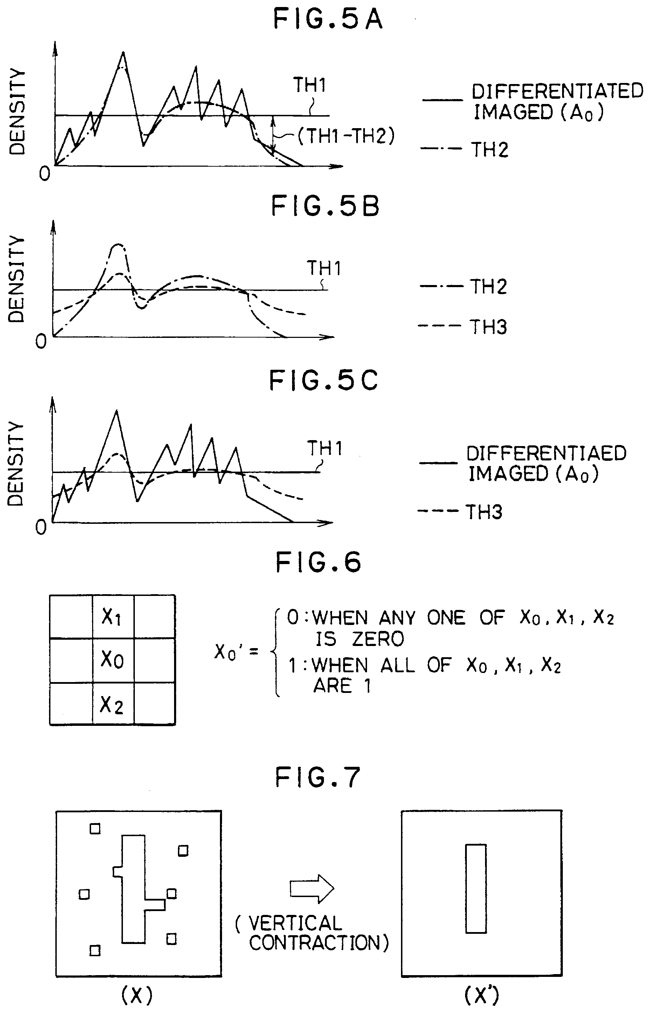

Fig. 1 is a schematic illustration including a block diagram showing the operation sequence of a first embodiment of the invention; Fig. 2 is a block diagram showing the part of the operation sequence shown in Fig. 1 more in detail; Fig. 3 is a graphic representation showing an exemplified method of determining the threshold TH1; Fig. 4 is an illustration given for the description of the method of determining the threshold TH2; and Figs. 5A to 5C are graphic illustrations showing the method of determining the threshold TH3.

In Fig. 1, reference numeral 10 designates a test piece to be inspected, such as a steel plate, paper sheet or plastics film, and the test piece or inspected material 10 is supplied from a supply roller 12 and taken up by a take-up roller 14 which is driven by a take-up motor 16. The image on the surface of the inspected material 10 is read by an image detection device 18, which may be, for example, the flying spot type device, during the material 10 is conveyed from the supply roller 12 to the take-up roller 14.

The image detection device 18 comprises a laser source 20 for emitting a scanning laser beam L, a rotating mirror (polygonal mirror) 24 rotated by a motor 22 to reflect the laser beam L to scan the inspected material 10 along the width direction thereof at a constant scanning speed, and a beam guide rod 26 for receiving the light beam L reflected by the surface of the inspected material 10, a pair of photo-multipliers 28 (28a, 28b) being attached to the ends of the beam guide rod 26. In detail, the beam guide rod 26 is disposed close to and parallel to the main scanning lane 30 for the scanning beam L, so that the light reflected by the surface of the inspected material 10 is totally reflected by the interior surface of the beam guide rod 26 to be guided to the ends thereof where the intensity of the reflected beam is detected by means of the photomultipliers or other type light receivers 28.

Image signals put-out from respective light receivers 28 are amplified by not-shown preamplifier and main amplifier, and then the wave forms thereof are regulated to be converted to analog signals $a_1$, $a_2$. These signals $a_1$, $a_2$ contain, respectively, signals appearing at a certain interval along the axis representing the lapse of time, the signals being picked up along the main scanning lines 30 which are shifted at an appropriate width.

The level of each of the signals $a_1$, $a_2$ is lowered as a remoter position on the main scanning line 30 is scanned, and raised as a closer position is scanned by the beam L. In order to remove the variation in levels of these signals $a_1$, $a_2$ depending on the cahnge in scanned position on the scanning line 30, the signals $a_1$ and $a_2$ are added in an adder 32 to be converted to a signal $a_3$ in the illustrated embodiment. The signal $a_3$ has an output level which is appreciably arcuated due to change in incident angle of the scanning beam L on the surface of the inspected material 10, unevenness or background of the surface of the inspected material 10, and attenuation of image signals within the beam guide rod 26.

The added signal $a_3$ is converted into a digital signal $a_4$, by an A/D converter 34, which may be a density signal having a certain tone of 256 density graduations. The signal $a_4$ is memorized in a line memory (not shown).

The signal $a_4$ obtained through the A/D conversion is then subjected to density conversion through a density converter 36, and subsequently differentiated by a spatial filter such as a differentiation filter 38. The density converter 36 processes the signal $a_4$ while using a predetermined Conversion Table to convert the signal into an appropriate desnity distribution, for example, within 256 graduations. The differentiation filter 38 is a spatial filter having a predetermined weight factor and overlapped to cover an area containing 3 x 3 picture elements surrounding a target picture element, so that the products of the corresponding picture elements are calculated to obtain an output which is the sum of the products.

Details of the density converter 36 and the differentiation filter 38 have been described in the co-pending United States Patent Application Serial No. 07/760,427 and EP-A-0475454, and hence the deteiled descriptions thereof will not repeated herein. Meanwhile, the density converter 36 may be omitted, and the signal $a_4$ may be fed directly into the differentiation filter 38. A signal $a_5$ is obtained by subjecting the signal

$a_4$ to spatial filtering by means of the differentiation filter 38, and the signal $a_5$ is deprived of the low frequency components so that the contour of each defect becomes clearer. This signal $a_5$ is used to form a differentiated image $A_0$.

Reference numeral 40 designates an address detector for determining the addresses of defects, by which the signal $a_5$ is compared, for example, with a pre-set threshold TH0 and the image is judged to be a defect when $a_5 > TH$ (or $a_5 < TH0$). As a defect is detected, the address Ad of the thus detected defect is then defined and memorized. The defected address Ad may be determined using a speed meter (pulse generator) 42 and the rotation angle of the motor 22. However, it should be noted hereby that the method of discriminating that the signal $a_5$ indicates a defect is not limited only to the method described hereinabove.

The address of a certain defect is determined as aforementioned. It suffices that the presence or absence of a defect is judged by this step, and therefore the threshold TH0 used for this purpose is set to a level which is higher than the level of a threshold TH3, the details of which will be described hereinafter, and rather close to the signal level of the defect to prevent erroneous detection due to a noise signal.

Binarizer (Binarizing Means):

On the other hand, the image formed by the output signal $a_5$ from the differentiation filter, 38, i.e. the differentiated image $A_0$, is fed into a binarizer or binarizing means 42. As shown in Fig. 2, this means 42 operates a first threshold TH1 and a second threshold TH2 to calculate a third threshold TH3, and then binarizes the signal $a_5$ while using the thus calculated threshold TH3.

The first threshold TH1 is determined from the density distribution of the entire differentiated image, and may be determined, for example, by using a density histogram of Fig. 3. Let the width of density distribution be $x$ in Fig. 3, the frequency threshold N(TH1) may be calculated from the following equation:

$$N(TH1) = (\text{Total Frequency})/f(x)$$

In the equation set forth above, $f(x)$ is a function of the distribution width $x$ and may be a quadratic of $x$. Let the density TH1, which is the frequency threshold N(TH1) in the histogram, be the first threshold, this becomes a threshold representing the density distribution of the entire differentiated image. Meantime, the value of N(TH1) may be empirically determined at a preliminary step, and the thus determined value is regarded as a constant in the defect detecting step.

The second threshold TH2 may be calculated from the average density of the area surrounding a target picture element. For instance, as shown in Fig. 4, the total sum $\Sigma dn$ of the densities d of 3 x 3 picture elements surrounding the target picture element is calculated, and then divided by 9 which is the number of picture elements.

The third threshold TH3 is determined by using the first and second thresholds TH1 and TH2, and may be calculated from the following equation of:

$$TH3 = TH1 - k(TH1 - TH2); \text{ where } k \text{ is a constant.}$$

The constant $k$ is empirically determined by a preliminary experiment, while taking the background pattern on the surface of the inspected material into account.

In the binarizer 42, each of the third thresholds TH3 determined for every picture elements of the differentiated image $A_0$ is compared with the density of each picture element of the differentiated image $A_0$ (by means of a comparator 44) to obtain a binarized image $A_1$. The binarized image $A_1$ is an image wherein the picture element density of the differentiated image $A_0$ (signal $a_5$) takes, for example, the value "1" within an area where the density is more than TH3 and takes a value of "0" within the other area, and includes not only an area containing a real defect but also an area which is discriminated as containing an defect due to a noise signal.

The operation of the binarizer 42 will be described further referring to Figs. 5A to 5C. Fig. 5A shows a threshold TH1 and an average density TH2 of the picture elements surrounding the target picture element, and also shows the difference (TH1 - TH2) between them. Fig. 5B shows TH3 which is calculated by subtracting the curve k(TH1 - TH2), which is obtained by multiplying the difference (TH1 - TH2) by a constant k, from TH1. Fig. 5C shows the interrelation between the differentiated image $A_0$ and the third threshold TH3.

As will seen from Fig. 5C, the third threshold TH3 used for the binarization of the differentiated image $A_0$ is varied following to the general variation of the image density to make it possible to clarify a small density change of the differentiated image $A_0$. Meanwhile, the influence of TH1 becomes larger as the constant k is closer to zero, and the influence of TH2 becomes larger as the constant k is closer to 1. This binarizing processing may be modified such that the constant k is set to be closer to zero when a dirty background is scanned, and the constant k is set to be closer to 1 when a clean background is scanned.

Vertical Contraction:

Referring back to Fig. 2, a contractor for effecting vertical contraction processing is denoted by 46. This contractor 46 contracts the binarized image $A_1$ in the vertical direction, i.e. the subsidiary scanning direction (feed direction of the inspected material 10), so as to remove the connection between the defect-containing portion and the background noise without deforming the shape of a linear defect extending in the vertical direction.

Fig.6 illustrates the algorithm of the contractor 46, and Fig. 7 shows the image before and after it is subjected to the processing. In this processing, two picture elements $X_1$, $X_2$ which are upper and lower picture elements adjacent to the target picture element $X_0$ are utilized so that the picture element $X_0'$ after the processing takes the value "0" when any one of $X_0$, $X_1$, $X_2$ is zero and takes the value "1" when all of $X_0$, $X_1$, $X_2$ are 1. "1" shows a defective picture element, while "0" shows a picture element forming the background. This processing is effected on all picture elements in the order of raster scanning. As the result, only the region continuous along the vertical direction is left, while the region continuous along the horizontal direction and dot-shaped noises are erased.

Meanwhile, the vertical contraction may be omitted when the value of the constant k used in the binarizer is close to zero or when defects extend not only along the vetical direction but also extend along the horizontal direction. Although it has been described that the defect contiguously extending along the vertical direction is left, two picture elements, which are right and left vicinal picture elements adjacent to the target picture element, are used in place of the upper and lower vicinal picture elements $X_1$, $X_2$ to effect a similar processing to leave a defect extending along the lateral or horizontal (i.e. in the main scanning) direction.

Defect Region Extractor:

In Figs. 1 and 2, reference numeral 48 designates a defect region area extractor. The extractor 48 extracts from the binarized image $A_1$ obtained through binarization a contiguous region containing the address Ad of the defect determined by the address detector 40. The remaining areas or regions of the binarized image $A_1$, which do not contain the address Ad of any defect, are removed as they do not contain any defect.

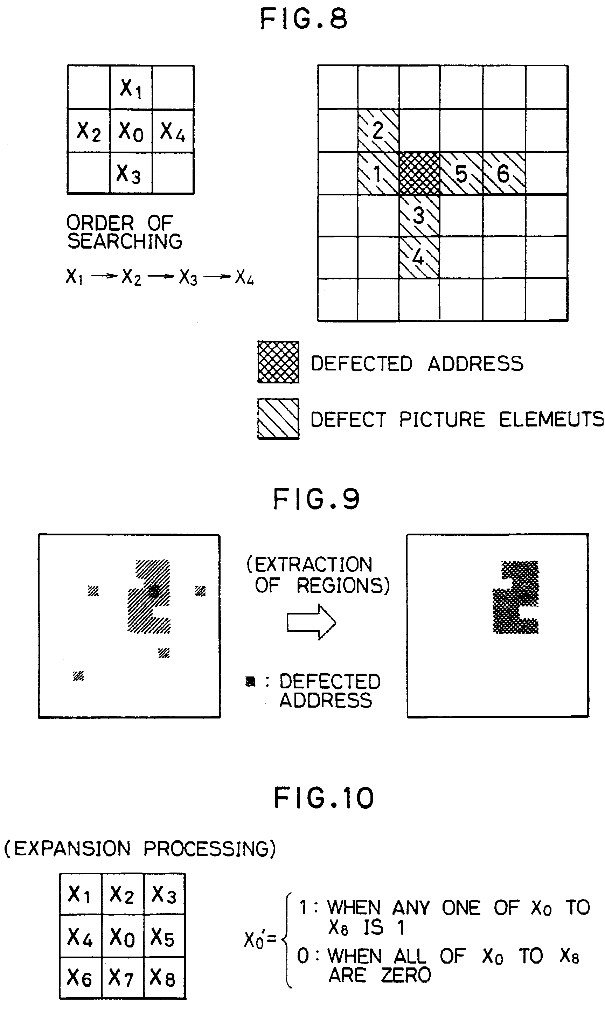

Fig. 8 is an illustration showing the algorithm of this processing, and Fig. 9 is an illustration showing the image before and after the processing. This processing is effected as follows. The picture element (defective picture element) which is designated by the defect address Ad by the address detector 40, and from which a defect signal is generated, is recognized as a target point. The following operations are conducted.

(1) The coordinate of the target point is recorded, and the picture element corresponding to the target point is attached with a label.

(2) Searching is conducted following the order of searching shown in Fig. 8, to find another picture element which is defective and yet not attached with the label.

(3) When any other defective picture element is found, the target point is transferred to the newly found defective picture element, and then processing is repeated from the step (1).

(4) When no defective picture element is found, the target point is transferred to the point just before the present target point, and then processing is repeated from the step (2).

The processing steps (1) to (4) are repeated until the picture element having no label is not found any more in the inspected area. The same processings are conducted for every defect signals emitted from the addresses (Ad) of the regions other than the regions to which labelling have already been completed. As the result, all regions containing defect signals can be extracted from plural regions of areas contained in the binarized image $A_1$, and at the same time areas containing no defect can be removed.

Pattern Modification:

The thus extracted defect-containing regions are subjected to pattern modification processing by a pattern modifier 50 (see Fig. 2). This processing is conducted, as will be described hereinbelow, to bring each extracted region to be easily recognizable at the subsequent step of discriminating the pattern, kind, grade or other features of the defect thereby to improve the reliability in discrimination. The processing by this means 50 may be omitted, when the defect-containing region detector 48 feeds an output of different type.

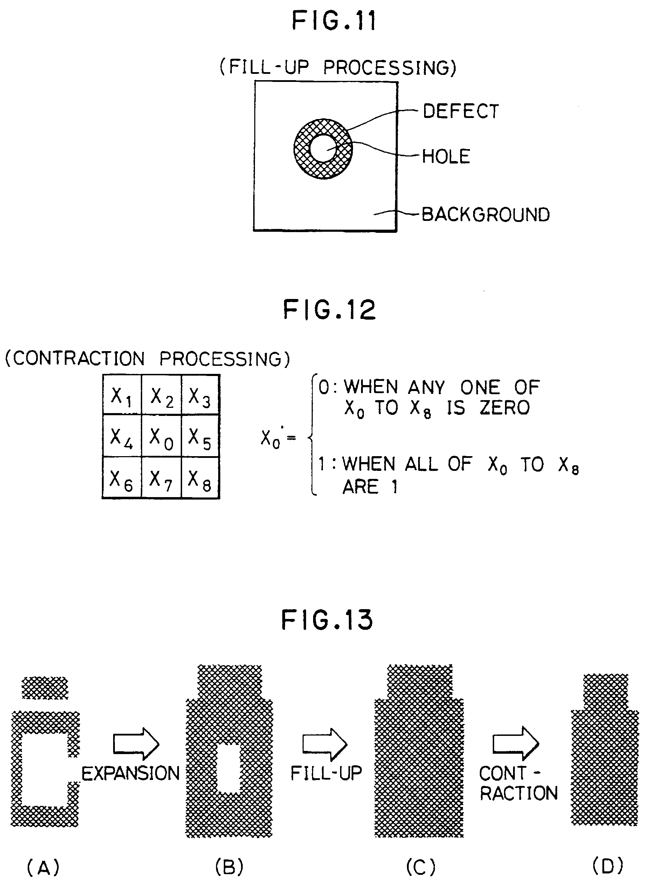

The pattern modifier 50 carries out processings including expansion 52, fill-up 54 and contraction 56, as shown in Fig. 2. Figs. 10, 11 and 12 are illustrations showing, respectively, the algorithm of expansion 52, fill-up 54 and contraction 56; and Fig. 13 shows changed images resulted by these processings.

Expansion:

Expansion 52 is a processing for joining plural fragmented defects adjacent with each other or for connecting an interrupted pattern. As shown in Fig. 10, eight picture elements $X_1$ to $X_8$ surrounding the target picture element $X_0$ are examined so that the picture element $X_0'$ after the processing is converted to 1 when any one of $X_0$ to $X_8$ is 1 and converted to 0 when all of $X_0$ to $X_8$ are zero.

Meanwhile, the value "1" indicates a defective picture element, and the value "0" indicates a picture element representing the background. This processing is repeated following to the raster scanning order. It is desirous that the processings are repeated successively for two times. As the result of this processing, the image prior to the processing as shown in Fig. 13(A) is expanded to be one continuous area as shown in Fig. 13(B).

Fill-up:

The fill-up (or hole-filling) 54 is a processing for carrying out to fill-up a void portion, when such a void portion or holl is contained in the image as shown in Fig. 13(B). The region formed by picture elements each having the value of "0" similar to the picture elements forming the background, as shown in Fig. 11, is judged as a void area or region, and the picture elements forming this void area are converted to have the value "1" similar to the defective picture element. The void shown in Fig. 13(B) is filled-up by this processing so that the image is changed to that as shown in Fig. 13(C).

Contraction:

Contraction 56 is a processing for restoring the dimensions of the expanded and enlarged image of the defect, which has been enlarged by the expansion processing 52, to have the dimensions of the original image. The algorithm of this processing is shown in Fig. 12. As shown, eight picture elements $X_1$ to $X_8$ surrounding the target picture element $X_0$ are examined, so that the picture element $X_0'$ after the processing takes the value of "0" when any one of $X_0$ to $X_8$ is 0 and takes the value of "1" when all of $X_0$ to $X_8$ are 1.

The value "1" indicates a defective picture element, whereas the value "0" indicates a picture element forming the background. The processing is repeated following to the raster scanning order. This processing is repeated for the same times as of the repeating cycles for the preceding expansion processing, i.e. two times. As the result, an image (defect image $A_2$) for extracting only the area (defective region) containing defect having modified pattern is put out.

Feature Extraction:

The image $A_2$, by which only the defective area is extracted or selected, is fed into a feature extractor 58 wherein the image $A_2$ is segmented by segmentation means 60 into areas each containing one defect, and then the features or characterizing parameters of respective defects are determined by the step 62 for the determination of features.

Segmentation processing by the segmentation means 60 is a processing by which the distribution of defected regions is determined by inspecting the marginal distribution informations or projections on the x and y axes of the defect image $A_2$, and then the image $A_2$ is divided or segmented into plural defective areas.

Segmentation of Defect-Containing Areas:

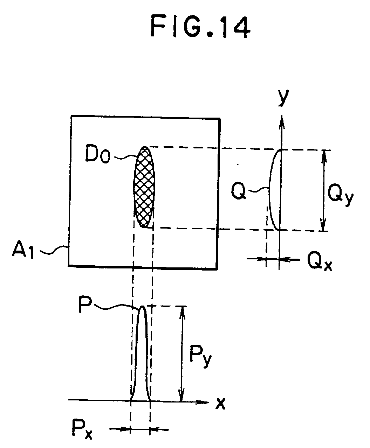

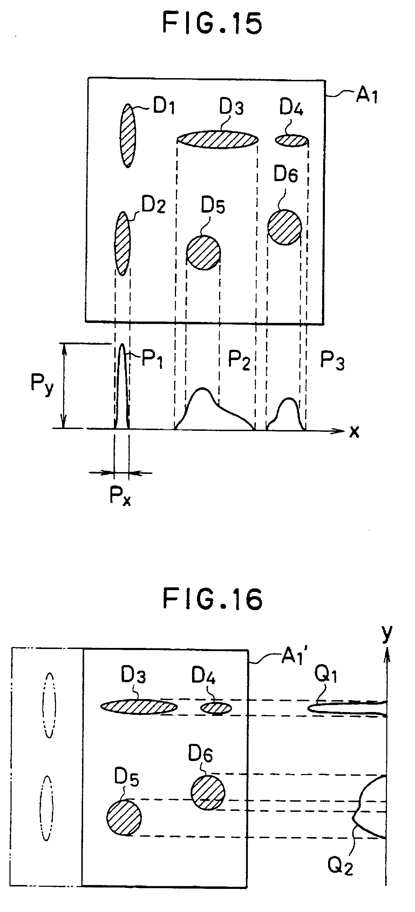

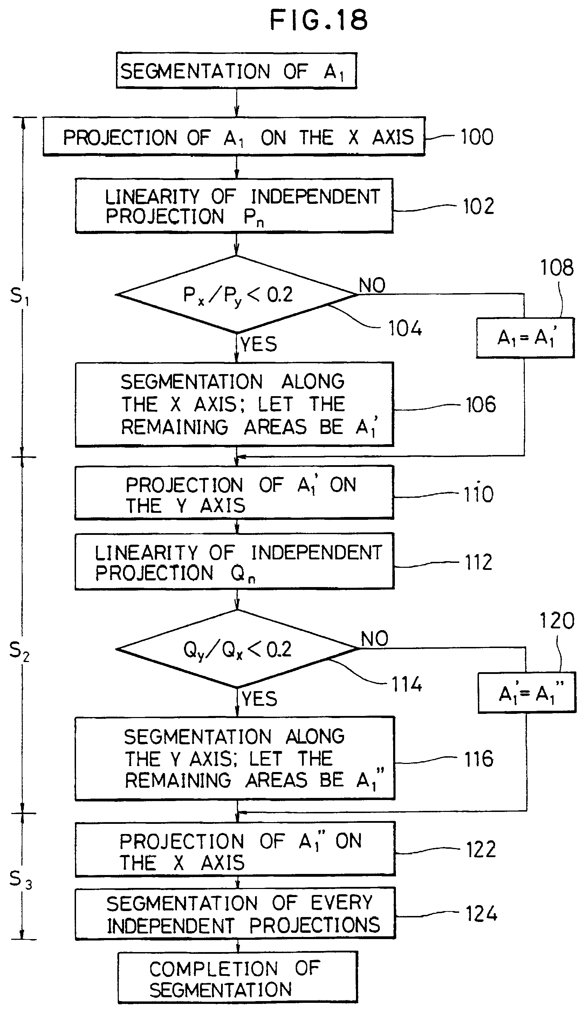

The details of the processing in the segmenatation means 60 will now be described with reference to Figs. 14 to 17. Fig. 14 is an illustration showing the concept of marginal distribution information or projection along a certain direction; Figs. 15 to 17 are illustrations showing the steps of segmenting the binarized image $A_1$ containing therein plural defects $D_1$ to $D_6$; and Fig. 18 is a flow chart showing the operation

EP 0 563 897 A1

sequence of the segmentation processing.

Referring to Fig. 14, the picture element number contained in the projection of a defect $D_0$ on the x axis, namely the subsidiary scanning direction, is indicated by P, and the picture element number contained in the projection on the main scanning direction is indicated by Q. When the defect $D_0$ is a line elongated or extending along the y axis, the projection P on the x axis has a sharp linearity. As the standard for judging the linearity, the widths $P_x$, $Q_y$ of the projections P, Q and the peak heights $P_y$, $Q_x$ are used. Namely, the linearity of the projection P is defined by the following ratio of:

(Width)/(Peak Height) = $P_x/P_y$;

whereas the linearity of the projection Q is defined by the following ratio of:

$Q_y/Q_x$.

When the ratio representing the linearity, as set forth above, is not more than 0.2, it is judged that the defect $D_0$ has the linearity. The independent projection P can be segmented on the x axis.

Processing of the binarized image $A_1$ containing therein defects $D_1$ to $D_6$ having various patterns or contours, as shown in Fig. 15, will now be described with reference to Figs. 15 to 18. The binarized image $A_1$ is initially projected on the x axis to obtain three independent projections $P_n$ ($P_1$, $P_2$, $P_3$) (Step 100 in Fig. 18). The linearity of each of these independent projections $P_n$ is examined (Step 102 in Fig. 18). In detail, the value of $P_x/P_y$ for each projection $P_n$ is calculated, and a certain independent projection is judged to have a linearity when the calculated value $P_x/P_y$ for the particular projection is not more than 0.2 ("Yes" at the Step 104 in Fig. 18), followed by segmentation of the area corresponding to the particular projection.

In the example shown in Fig. 15, the projection $P_1$ is judged to have a linearity so that the area containing the projection $P_1$ is segmented, as the first linear region as shown in Fig. 16. The remaining area (i.e. the first non-linear region) which has been judged as having no linearity is denoted by $A_1'$ (Step 106 in Fig. 18). On the other hand, if no independent projection having linearity is found (No at the Step 104 in Fig. 18), segmentation is not effected to handle the image $A_1$ as the image $A_1'$ after then (Step 108 in Fig. 18). The steps 100 to 108, as described above, are segmentation steps using the projection on the x axis, and conducted by a first segmentation means $S_1$.

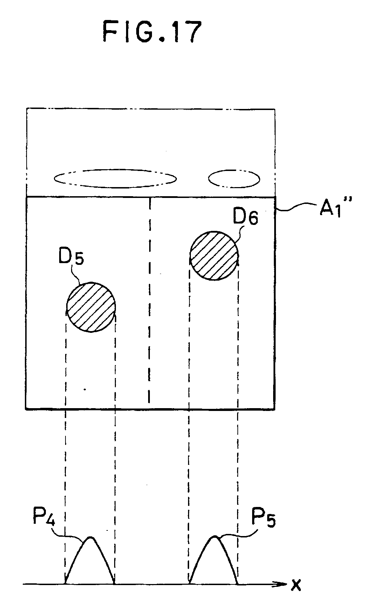

After the completion of processing through the first segmentation means $S_1$, the image $A_1'$ is processed to know the marginal distribution or second projection on the y axis (Step 110). As independent projections $Q_n$ ($Q_1$, $Q_2$) are obtained, the linearities thereof are examined (Step 112). When an independent projection $Q_1$ (see Fig. 16) having the ratio $Q_y/Q_x$ of not more than 0.2 is selected (Yes at the Step 114), the area containing the projection $Q_1$ is segmented on the y axis as the second linear region, and the remaining area (i.e. the second non-linear region) is denoted by $A_1''$ (Fig. 17, Step 116).

If no linear projection $Q_n$ is found (No at the Step 114), the area $A_1'$ is used as the area $A_1''$ (Step 120). The segmentation processing using the projection $Q_n$ on the y axis is conducted by a second segmentation means $S_2$. The image is then fed into a third segmentation means $S_3$, which may be the first segmentation means $S_1$ used to repeat the similar processing steps.

The third segmentation means $S_3$ processes the image $A_1''$ of the remaining area (i.e. the second non-linear region), after the completion of projection of the image $A_1'$ on the y axis and subsequent processing, to examine a further projection on the x axis (Step 112) to segment the same into independent projections $P_n$ ($P_4$, $P_5$) (Step 124). In Fig. 17, the broken line drawn between the defects $D_5$ and $D_6$ is the dividing line for segmentation.

Determination of Features:

By the determination means 62 for determining the feature of the defects, the features or characterizing parameters of each of the segmented defect-containing areas (or regions), such as area, length, width, directivity, average density, polarity (positive or negative) or the like, are determined. The average density is calculated by extracting the region of the original image covering the defected region as a masked image or masked plane, and the density of the masked image is measured.

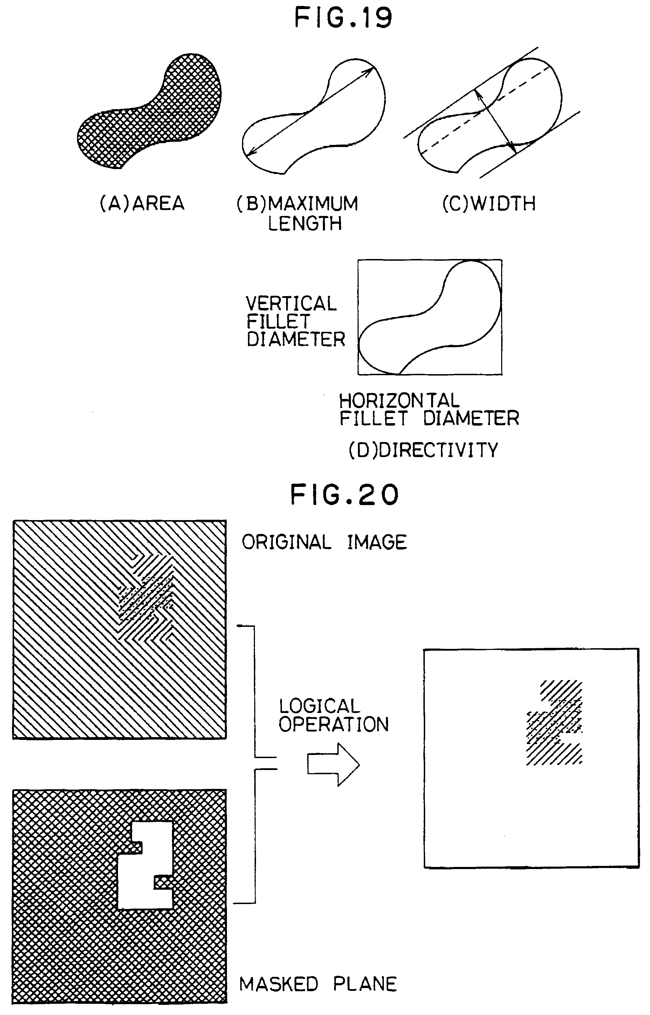

Figs. 19 and 20 show the concepts of these features or characterizing parameters. Fig. 19(A) shows the area of the defect D, the area being determined by counting the picture element number contained in the defect D. The length of the defect D is determined by the absolute maximum length, as shown in Fig. 19-(B). The width of the defect D is determined, as shown in Fig. 19(C), by the maximum width along the direction perpendicular to the direction of the maximum length shown in Fig. 19(B).

10

The directivity is judged by comparing the vertical fillet diameter with the horizontal fillet diameter, as shown in Fig. 19(D), and judged as follows:

Vertical when

(vertical fillet diameter)$\geqq$(horizontal fillet diameter);

Horizontal when

(vertical fillet diameter)<(horizontal fillet diameter).

The average density is determined as follows. Fig. 20 shows the concept in determination of the average density. The defect and the background are binarized to extract the defected region which is smeared to obtain a defect image $A_2$ which is used as a masked image or a masked plane. A logical operation is conducted between the masked plane and the original image to obtain a density image of the extracted defected region. Meantime, the image obtained by the output signal $a_4$ from the A/D converter 34 of Fig. 1 or the differentiated image $A_0$ may be used as the original image. The average density of the defect in the defected region and the average density of the background in the background region are determined, and the difference between then is used as the average density. Namely, the average density is determiend by:

$$(\text{Average Density}) = |(\text{Average Density of Defect}) - (\text{Average Density of Background})|$$

Meantime, the polarity is judged by referring to the average densities of the defect and the background as follows:

White when (Average Density of Defect) - (Average Density of Background)$\geqq$0
Black when (Average Density of Defect) - (Average Density of Background)<0

Image Discriminating Processing:

As the features of each defect has been determined, the pattern or shape of the defect is discriminated by an image discriminating processor (or image recognizer) 64 and then the grade of the defect is discriminated or recognized to render the final decision on a particular defect.

Shape Recognition:

The shape or pattern of each defect is discriminated or recognized by pattern discrimination or shape recognition 66. This discrimination process 66 includes two step processings so that the pattern of each defect is initially subjected to gross classification through recognition by the neural network, and then subjected to fine classification through discrimination by the use of a decision tree.

Neural Network:

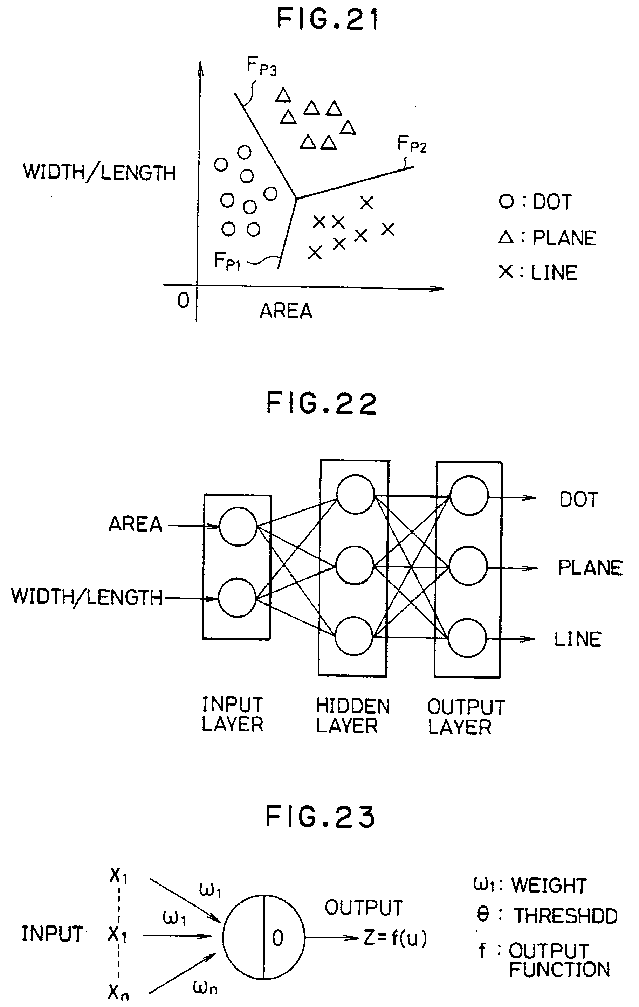

Fig. 21 is a graphic representation showing the distribution of categories (such as dots, lines, planes) relating to the shape or pattern of respective defects on a feature defining space. In the illustrated embodiment, "area" and the ratio of "width/length" are used as the features or characterizing parameters, and a two-dimensional feature defining space is fixed while using these parameters to form the coordinates.

The categories of the pattern, which is to be discriminated, are arranged on the feature defining space. Discriminant planes or functions $F_p$, which form boundaries for classifying the defects into dots, planes and lines, are hypothetically fixed. In the illustrated embodiment, three discriminant planes or functions $F_{p1}$, $F_{p2}$, $F_{p3}$, are fixed. These features have been normalized by the use of a normalizing constant in order that the features are contained within the range of [0, 1.0].

Two features, i.e. the "area" and the ratio of "width/length", of each defect are fed in the neural network as the input in the illustrated embodiment, and the neural netowork classify each defect into one of threee categories, i.e. the dot, plane or line, by using three discriminant planes $F_p$ on the two-dimensional feature space. Accordingly, the neural network used in this embodiment is composed of a three-layered construction including input units, hidden units and output units, as shown in Fig. 22, the number of the input units being equal to the dimension 2 of the feature defining space, the number of the hidden units being set to 3 which is equal to the number of discriminant planes, and the number of the output unit is set to 3 which is equal to the number of categories (dot, plane, line).

The interrelation between the input and the output of each unit is shown in Fig. 23. As the inputs to the particular unit are $(x_1, x_2, \text{----}, x_n)$, the input and output operations are as follows:

$u = \Sigma w_i x_i - \theta$ (wherein $\Sigma$ is the sum of i = 1 to n)

$z = f(u)$

In the formulae set forth above, $w_i$ stands for the weight, $\theta$ stands for the threshold, f(u) stands for a response function, and u stands for the internal potential (membrane potential).

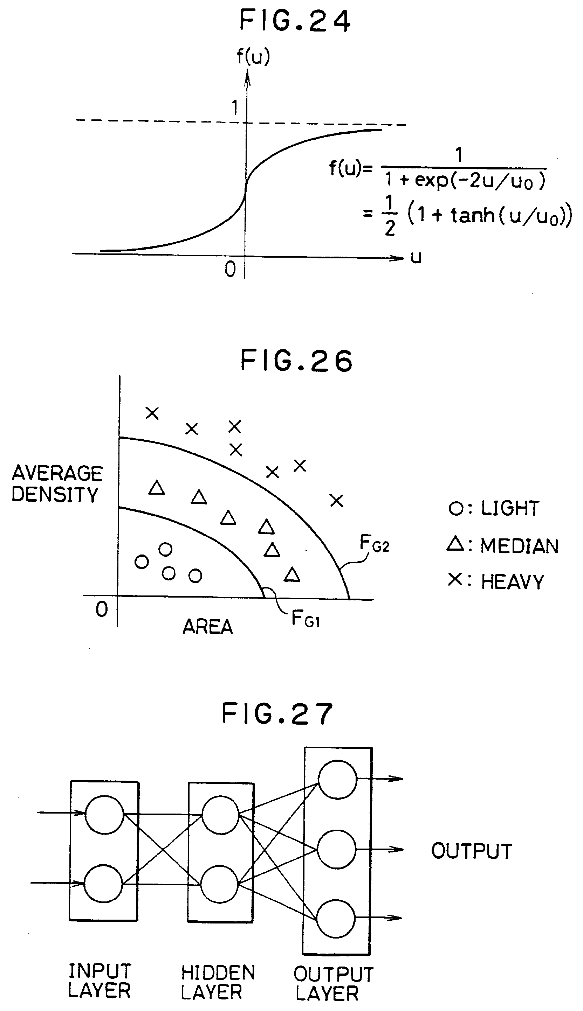

The response function f(u) giving the output z may be a binary model (linear threshold element model) which allows to take either one of two digits 0 or $\overline{1}$. However, in the illustrated embodiment, the response or output function f(u) is a continuous value type model in which a sigmoid function shown in Fig. 24 is used. A representative sigmoid function is set forth below:

$f(u) = 1/\{1 + \exp(-2u/u_0)\}$ ;

wherein $u_0$ is a constant.

Two input units in the input layer receives, respectively, the features of "area" and "width/length". These inputs are operated according to the input-output interrelation (see Fig. 23), and processed through the hidden units to be layer to the output layer. The three output units in the output layer correspond, respectively, to the category of dot, the category of line and the category of plane. The unit feeding a maxium output is selected to determine that the category corresponding to the thus selected unit is the result of classification. Meanwhile, it is to be noted hereby that the weight $w_i$ between these units have been determined by preparatory learning steps so that per-set in the neural network prior to the initiation of this processing.

Decision Tree:

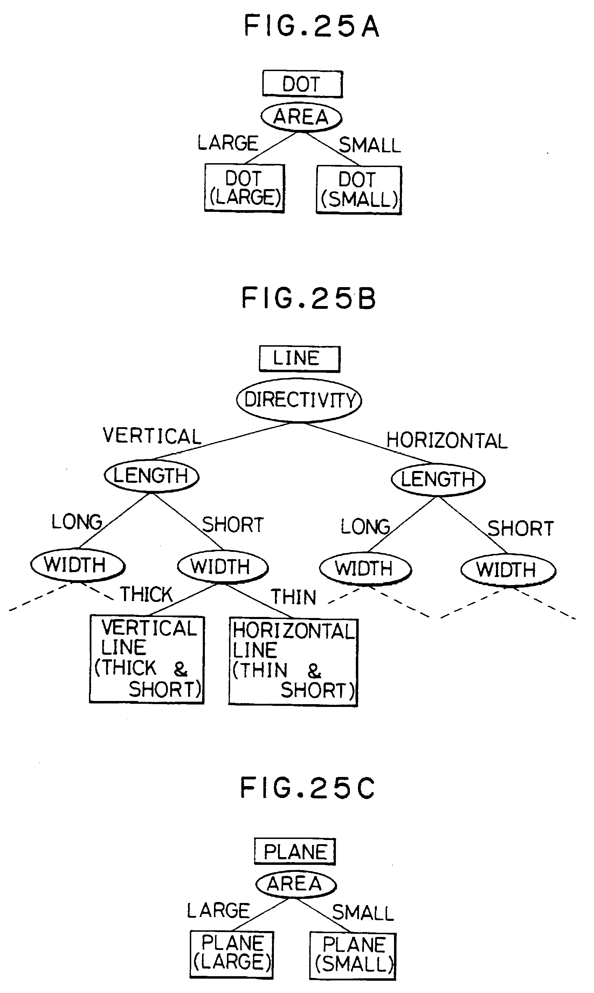

As the category (dot, line or plane) of the shape of each defect has been discriminated, the defect is then subjected to fine classification while using a decision tree. Examples of the decision tree are shown in Figs. 25A, 25B and 25C. The features and classification categories used for fine classification of every defect patterns are shown in the following Table 1.

Table 1

| Pattern | Feature | Classification Category |
|---|---|---|
| Line | Direction/Length/Width | Vertical/Thick/Long<br>Vertical/Thick/Short<br>Vertical/Thin/Long<br>Vertical/Thin/Short<br>Horizontal/Thick/Long<br>Horizontal/Thick/Short<br>Horizontal/Thin/Long<br>Horizontal/Thin/Short |
| Plane | Area | Large/Small |
| Dot | Area | Large/Small |

The features of each defect are compared with the thresholds set for every nodes of the tree to select the course depending on the results of comparison. The result of fine classification is determined by the category at each terminal end of the decision tree. It is desirous that the information relating to the polarity is added to the result of fine classification when the polarity of the defect is determined by the means 62 for the determination of features, although the polarity is not a feature relating to the shape or pattern.

Grade Recognition:

Grades of reapective defects are discriminated by the grade recognition step 68 (Fig. 2). In this step 68, each defect is divided into three levels, i.e. light, median and heavy, for every patterns by classifying the same by the neural network while using two kinds of features, for example, "area" and "average density" of the defect.

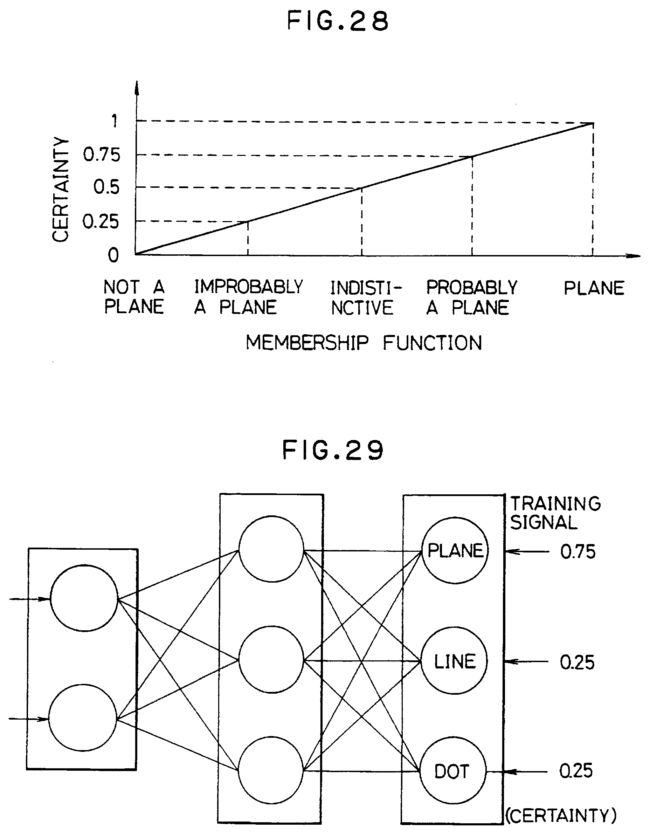

Fig. 26 shows the distribution of the grade categories (light, median, heavy) on the feature space used in the neural network, and Fig. 27 is an illustration showing the construction of the neural network. The used feature space is a two-dimensional space defined by the axes of "area' and "average density".

Categories for dividing into plural grades are arranged on the feature space, and hypothitical discriminant planes $F_G$ for forming the boundaries for respective categories are placed. In the illustrated embodiment, two discriminant planes $F_{G1}$, $F_{G2}$ are incorporated. The features or characterizing parameters used in the feature space are normalized by using a normalizing constant in order that the features are contained in the range of [0, 1.0].

The construction of the neural network for introducing the discriminant planes $F_G$ may be composed of a three-layered construction as shown in Fig. 27. The number of the input units of the input layer is set to 2 which is equal to the dimensions of the feature defining space, the number of the hidden units in the hidden layer being set to 2 which is equal to the number of the discriminant planes $F_G$, and the number of the output units in the output layer being set to 3 which is equal to the number of categories (light, median, heavy).

Six neural networks are prepared. These six neural networks correspond, respectively, to six combinations between the patterns (dot, line, plane) and the polarities (positive, negative). The patterns (dot, line, plane) used herewith are classified by the neural network for the discrimination of shape or pattern and used in the preceding pattern recognition step 66 as described in Fig. 22. The neural network includes selected number of grades which are selected in consideration of the result of gross classification relating to the pattern (Fig. 22) and polarity of the defect.

As the inputs to the thus selected neural network, the "area" and "average density" are fed in the form of normalizd features, the inputs are processed through the units of respective layers to be put out as the outputs. Each output unit in the output layer corresponds to either one of the three categories, heavy, median and light, so that the unit feeding a maximum output is selected to determine that the category corresponding to the thus selected unit is the result of classification. The input and output operations for respective units are similar to those in the neural network used for the classification or discrimination of pattern or shape of the defect, the only differences being the values of weight $w_i$ and threshold $\theta$, and hence the description thereof will not be repeated.

Learning of the Weight $w_i$:

The learning step for obtaining desirous outputs for every inputs, in the neural network (shown in Fig. 22) for the discrimination or recognition of pattern used for the gross classification of pattern and in the neural network (shown in Fig. 27) for the discrimiantion or recognition of grade, will now be described.

For example, for the neural network for the classification of pattern, the learning data are the combinations each composed of a feature determined by the step 62 for the determination of features and a training signal relating to the classification category. The training signal is an output which is preferably output from the neural network upon receipt of a certain input, and such a training signal is given from the external interface.

The learning data for the discrimination of pattern may be the following model. The features have been normalized to be used in the following model.

(Input Data) = (Area, Width/Length)
(Training Signal) = (0.98, 0.02, 0.02) --- Planer Defect
(Training Signal) = (0.02, 0.98, 0.02) --- Linear Defect
(Training Signal) = (0.02, 0.02, 0.98) --- Dot Defect

On the other hand, the learning data for the discrimination of grade may be the following model.

(Input Data) = (Area, Average Density)
(Training Signal) = (0.98, 0.02, 0.02) --- Heavy Defect
(Training Signal) = (0.02, 0.98, 0.02) --- Median Defect
(Training Signal) = (0.02, 0.02, 0.98) --- Light Defect

The numerical values of 0.98 and 0.02 are exemplified values which are selected merely for the reason that the former is close to 1 and the latter is close to zero. The numerical values used in the training signal are not limited to the illustrated values.

As the learning method, it is recommended to use the Error Back Propagation Algorithm which is a generally used method.

In the learning step for the neural network for the discrimination or recognition of pattern, a set of an input data with a training signal for a certain proper pattern is prepared, and the differences $(T_i - O_i)$ between the output data $O_i$ from every output units and the training signal $T_i$ are determined. The error function E is defined by the total sum of the squares of these differences, as set forth hereinbelow, and used for the appraisal of learning.

$$E = (1/2)\Sigma_i(T_i - O_i)^2$$

In the equation set forth above, $T_i$ stands for the training signal for the ith unit of the output units, and $O_i$ stands for the outputs from respective output units. Since the output $O_i$ is determined by the weight $w_i$ of the connection between the units, the error function E is a function which has been latently defined as of the weight $w_i$. Accordingly, by calling in mind imaginal spaces each having the value of each weight $w_i$ as the axis and supposing that the value defined by the error function E determines the height, the error function E forms a hypersurface defined as a "curved error surface" over the spaces defining these weights $w_i$.

In order to arrive at the minimized value or point on the curved error surface the route of steepest inclination on the curved error surface should be taken in accordance with the gradient decent method. In brief, the gradient of the error function is calculated, and the weight $w_i$ is modified to move to the direction having the steepest gradient.

$$\text{grad } E = (\partial E/\partial w_i, \partial E/\partial w_2, -----, \partial E/\partial w_n)$$

Hence, the weights $w_i$ should be changed by:

$$w_i = -\epsilon \cdot \partial E/\partial w_i \ (\epsilon > 0)$$

Operations are repeated while changing $w_i$ by the variation as set forth hereinabove, until the value of the error function E reaches a sufficiently small value.

Addition of Certainty by the Membership Function:

The steps of subjecting the pattern of the defect to gross classification or discriminating the grade of the defect by using a neural network have been described. The training signal $T_i$ used in the learning step may be substituted by the certainty which is defined by the membership function. The membership function is the function for alloting a certain value between 0 and 1 to a particular category.

Fig. 28 shows one example of such a membership function. Fig. 29 shows the training signals which are given in terms of certainty. For example, supposing now that a certain pattern having some input data is "likely to be a plane (planer defect)", a certainty "0.75" may be fed to the output unit corresponding to "plane" as the training signal $T_i$ indicating that the pattern is "probably a plane", and simultaneously a certainty "0.25", which means that the pattern is "improbably a plane", may be fed to the other units. In such a case, as the input data of the inspected image are supplied, the outputs from respective output units indicate the certainties of respective units. Accordingly, it becomes possible to add the certainty to the result of discrimination by additionally recording the outputs from every output units.

Final Decision:

After the completion of discrimination of the patterns and grades of respective defects, final decision is rendered by the step 70 for final decision. If plural defects are belonged to the same category, an information stating such a fact is added. When plural defects having the same pattern, shape or contour are found, the influence by the increase in number of the defects may be added by raising the grade of the defect of such pattern higher than the grade of another pattern to which only a single defect belongs.

Effects of the Invention:

As should be appreciated from the foregoing, according to the present invention, the address Ad of a defect is determined by a defect address detector 40, and a differentiated image is binarized by a binarizer 42 while using a third threshold TH 3 which is determined by referring to a first threshold TH1 calculated from the histogram of the densities of all differentiated images and a second threshold TH 2 calculated from the average density of the picture elements surrounding each target picture element. Then, only the area or region containing the address Ad of the defect is extracted by a defect region extractor 48 from the binarized image $A_1$, and all picture elements in the thus extracted region is smeared. Namely, the value of all picture elements internally of the extracted area or region are converted or transformed into the value which indicates defect. As a result, defects can be detected automatically without the need of judgement by the oerator to precisely discriminate the patterns and areas of the defective regions containing any defects. The system of the invention is well suited for the discrimination or recognition of the grade of a defect while using an image ($A_2$) of the defect.

The third threshold may be calculated from the equation of:

$$TH3 = TH1 - k(TH1 - TH2)$$

In the equation, the constant k may be varied depending on the condition or characteristics of the inspected material to realize more reliable extraction of the defect-containing region.

By interposing means for effecting vertical contraction 46 next to the binarizer 42 for contracting the image in the vertical direction (main or subsidiary scanning direction), a linear defect can be extracted accurately while removing defects extending in the direction perpendicular to the vertical direction and also removing dot-shaped defects.

The defect image $A_2$, which is the output from the defect-containing area extractor 48, may be additionally subjected to expansion, fill-up and contraction thereby to discriminate the pattern of the defect more precisely to facilitate the subsequent processings, such as discrimination of the defect image.

According to another aspect of the invention, the binarized image is segmented into plural segments or region each containing one defect, while making use of projections of the binarized image. Thus, it becomes possible to discriminate the pattern, kind and grade of respective defects for every segmented areas.

In addition to detection of the address of a defect by the address detector, the image is binarized so that all picture elements internally of only the area containing the address of the defect is smeared or converted into the value repesenting as a defect (for example to have the value "1") to extract the area containing the defect more precisely. By this measure, the accuracy in discrimination of the pattern, kind and grade of defects can be appreciably improved.

By segmenting independent areas each having a linearity from the projection on the subsidiary or main scanning direction, linear or stripe-shaped defects can be discriminated from the defects of other patterns. In a preferred embodiment of the invention, a first segmentation of a projection on either one of the subsidiary and main scanning directions is effected, a second segmentation being effected in the direction perpendicular to the direction of the first segmentation, and then the remaining area is further segmented by segmenting a further projection.

According to a further aspect of the invention, a neural network is constructed and subjected to learning to discriminate the categories of pattern of the defected region, the inputs into the neural network being the features or characterizing parameters including at least the length, the width and the area of the defected region. With this construction, labours for constructing the discriminating logic through the try-and-error technique can be omitted to obtain a precise discrimination system within a short time.

By the incorporation of another neural network for discriminating the grade (heavy, median, light) of the defect, to which features or characterizing parameters including at least the area and the density information of the defect are fed as the inputs, the grade of each defect can be precisely discriminated.

The nueral network has a three-layered structure including input units, hidden units and output units, and wherein the number of input units is set to be equal to the dimensions of the feature vectors having the vector components each indicating one of the features, the number of the hidden units being set to be equal to the number of discriminant planes on the feature space, and the number of the output units being set to be equal to the number of categories to be discriminated.

In the neural network, it is required to learn the weight $w_i$. At such a learning step, a certainty calculated from a membership function may be added as the training signal $T_i$ used in the learning step. In detail, all output units are applied with different certainties ranging between 0 to 1. In such a case, each of the output units feeds a certainty relating to the category of the defect to be discriminated as the output signal. Accordingly, by feeding the outputs from these units simultaneously, a certainty may be added to the result of discrimination.

It is desirous that a binarized image obtained by smearing only the region containing any defect is used as an image information subjected to discrimination of the pattern of the defect. For this purpose, presence or absence of a defect is initially discriminated by inspecting the differentiated image to determine the address of the defect, and then only the area containing therein the address of the defect is selected, from the binarizd image which is obtained by binarization by the use of a pre-set threshold, and smeared to have a value indicating the defect. By determining the features or characterizing parameters by the use of such an image of the thus extracted area containing therein the defect, the accuracy in discrimination of the pattern of the defect can be improved.

Although the system of the invention has been described by referring to the embodiments as though it is a system for detecting faults or defective portions appearing on the surface of the inspected material, the present invention is not limited only to the sytem for the instepction of the surface of a material but includes system for detecting internal defects. For example, a system for detecting internal defects within a steel plate by the utiliztion of magneto-optical effect may be conceived within the scope of the invention. In such an alternation, the material to be inspected is magnetized in an AC magnetic field, and the leaked magnetic field from the defect portion is detected by measuring the change in polarization of the reflected light.

**Claims**

**1.** A defect inspection system for extracting a region containing at least one defect from an image of an inspected material by analyzing the differentiated image, said differentiated image being composed of differentiated image signals which are obtained by scanning said inspected material and then differentiated by using a spatial filter including a differentiation filter, comprising:

(a) an address detector for determining the address of said defect by referring to the differentiated image signal;

(b) a binarizer for binarizing each picture element of the differentiated image by comparing said each picture element with the third threshold (TH3), which is determined by referring to the first threshold (TH1) calculated from the histogram of the densities of all picture elements in the differentiated image and the second threshold (TH2) calculated from the average density of the picture elements surrounding said each target picture element; and

(c) a defect region extractor for extracting a region containing the address of the detected defect from the binarized image of the inspected material by transforming the value of the picture element in said region into the value which indicates the defect. and then smearing the inner region of the thus extracted area.

**2.** The defect inspection system of claim 1, wherein said third threshold TH3 is determined by the following equation of:

$$TH3 = TH2 - k(TH1 - TH2); \text{ wherein } \underline{k} \text{ is a constant.}$$

**3.** The defect inspection system of claim 1, further comprising processing means for contracting the binarized image, which is obtained by said binarizer, along the main or subsidiary scanning direction and outputting the thus processed image data into said defect region extractor.

**4.** The defect inspection system of claim 2, further comprising processing means for contracting the binarized image, which is obtained by said binarizer, along the main or subsidiary scanning direction and outputting the thus processed image data into said defect region extractor.

**5.** The defect inspection system of claim 1, further comprising a pattern modifier for processing the region obtained by said defect region extractor to execute at least one of expansion, fill-up and contraction processings.

**6.** The defect inspection system of claim 2, further comprising a pattern modifier for processing the region obtained by said defect region extractor to execute at least one of expansion, fill-up and contraction processings.

**7.** The defect inspection system of claim 3, further comprising a pattern modifier for processing the region obtained by said defect region extractor to execute at least one of expansion, fill-up and contraction processings.

**8.** The defect inspection system of claim 4, further comprising a pattern modifier for processing the region obtained by said defect region extractor to execute at least one of expansion, fill-up and contraction processings.

9. A defect inspection system for extracting and inspecting a binarized image signal containing therein plural defects from an image of an inspected material, said binarized image being obtained by scanning said inspected material, differentiated by using a spatial filter including a differentiation filter, and then binarized, comprising:

segmentation means for segmenting said binarized image into plural defect-containing regions each containing at least one defect.

10. The defect inspection system of claim 9, wherein said segmentation means comprises:

(a) first segmentation means for segmenting said binarized image, by analyzing the first projection obtained by projecting said binarized image along the first direction which is either the subsidiary or the main scanning direction, into the first linear region and the first non-linear region, wherein the first linear region has a linear characteristic pattern along the first direction, and wherein the first non-linear region has no linear characteristic pattern along the first direction;

(b) second segmentation means for segmenting the first non-linear region, by analyzing the second projection obtained by projecting the binarized image contained in the first non-linear region along the second direction which is a direction other than the first direction, into the second linear region and the second non-linear region, wherein the second linear region has a linear characteristic pattern along the second direction, and wheerein the second non-linear region has no linear characteristic pattern along the second direction; and

(c) third segmentation means for segmenting the second non-linear region, by analyzing the third projection obtained by projecting the binarized image contained in the second non-linear region along the first direction, into the third linear region and the third non-linear region, wherein the third linear region has a linear characteristic pattern along the first direction, and wherein the third non-linear region has no linear characteristic pattern along the first direction.

11. A defect inspection system for extracting and inspecting a binarized image containing therein plural defects from an image of an inspected material, said binarized image being obtained by scanning said inspected material, differentiated by using a spatial filter including a differentiation filter, and then binarized, comprising:

(a) an address detector for determining the address of the defect by referring to the differentiated image signal obtained by said spatial filter;

(b) a binarizer for binarizing the differentiated image signal to output a binarized image signal composing said binarized image;

(c) a defect region extractor for extracting a region containing the address of the detected defect from the binarized image of the inspected material by transforming the values of the picture elements in the region into the value which indicates the defect; and

(d) segmentation means for segmenting the binarized image in the region into plural defect-containing regions each containing at least one defect.

12. The defect inspection system of claim 11, wherein said segmentation means (d) comprises:

(d-i) first segmentation means for segmenting said binarized image, by analyzing the first projection obtained by projecting said binarized image along the first direction which is either the subsidiary or the main scanning direction, into the first linear region and the first non-linear region, wherein the first linear region has a linear characteristic pattern along the first direction, and wherein the first non-linear region has no linear characteristic pattern along the first direction;

(d-ii) second segmentation means for segmenting the first non-linear region, by analyzing the second projection obtained by projecting the binarized image contained in the first non-linear region along the second direction which is a direction other than the first direction, into the second linear region and the second non-linear region, wherein the second linear region has a linear characteristic pattern along the second direction, and wheerein the second non-linear region has no linear characteristic pattern along the second direction; and

(d-iii) third segmentation means for segmenting the second non-linear region, by analyzing the third projection obtained by projecting the binarized image contained in the second non-linear region along the first direction, into the third linear region and the third non-linear region, wherein the third linear region has a linear characteristic pattern along the first direction, and wherein the third non-linear region has no linear characteristic pattern along the first direction.

EP 0 563 897 A1

**13.** A defect inspection system for extracting a region containing therein at least one defect by analyzing the differentiated image, said differentiated image being composed of differentiated image signal which is obtained by scanning said inspected material and then differentiated by using a spatial filter including a differentiation filter, the thus extracted region being discriminated to be classified into one of plural shape pattern categories each defined to include defects of specific characteristics, comprising:

(a) determination means for determining the feature of the defect including at least the length, width and area of the defect; and

(b) a neural network for receiving the outputs from said determination means to discriminate the pattern of the defect to classify the defect into one of plural pattern categories.

**14.** The defect inspection system of claim 13, wherein said neural network (b) is composed of the following three kinds of layers:

(b-i) an input layer having a specific number of input units, the number of the input unit being equal to the dimension number of the feature vectors having the vector components each indicating one of the features;

(b-ii) a hidden layer having a specific number of hidden units, the number of the hidden units being equal to the number of discriminant planes necessary for the classification of the patterns of the defects into the plural pattern categories within the feature space defined by the feature vectors; and

(b-iii) an output layer having a specific number of output units, the number of the output units being equal to the number of the plural pattern categories.

**15.** The defect inspection system of claim 14, wherein a training signal is calculated by the use of a membership function at the learning step of said neural network so that the output from each unit of the output units is added to each of the results of discrimination of pattern category as a certainty after the learning step.

**16.** A defect inspection system for extracting a region containing therein at least one defect from an image of an inspected material by analyzing the differentiated image, said differentiated image being composed of differentiated image signal which is obtained by scanning said inspected material and then differentiated by using a spatial filter including a differentiation filter, the thus extracted region being discriminated to be classified into one of discriminating categories which define grades of defects, comprising:

(a) determination means for determining the feature of the defect including at least the area and density informations; and

(b) a neural network for receiving the output from said determination means to discriminate the grade of the defect to classify the defect into plural grade categories.

**17.** The defect inspection system of claim 16, wherein said neural network (b) is composed of the following three kinds of layers:

(b-i) an input layer having a specific number of input units, the number of the input unit being equal to the dimension number of the feature vectors having the vector components each indicating one of the features;

(b-ii) a hidden layer having a specific number of hidden units, the number of said hidden units being equal to the number of discriminant planes necessary for the classification of the grades of the defect within the feature space defined by the feature vectors; and

(b-iii) an output layer having a specific number of output units, the number of the output units being equal to the number of said plural grade categories.

**18.** The defect inspection system of claim 17, wherein a training signal is calculated by the use of a membership function at the learning step of said neural network so that the output from each unit is added to each of the results of discrimination of grades of the defects as a certianty after the learning step.

**19.** The defect inspection system of claim 13, further comprising:

(a) an address detector for determing the address of the defect by referring to the differentiated image signal;

(b) a binarizer for binarizing the differentiated image signal to output a binarized image signal composing said binarized image; and

18

(c) a defect region extractor for extracting a region containing the address of the detected defect from the binarized image of the inspected material by transforming the value of the picture element in the region into the value which indicates the defect; and

wherein the pattern of respective defects are discriminated to be classified into plural pattern categories by analyzing the outputs from said defect region extractor.

20. The defect inspection system of claim 14, further comprising:
(a) an address detector for determing the address of the defect by referring to the differentiated image signal;
(b) a binarizer for binarizing the differentiated image signal to output a binarized image signal composing said binarized image; and
(c) a defect region extractor for extracting a region containing the address of the detected defect from the binarized image of the inspected material by transforming the value of the picture element in the region into the value which indicates the defect; and

wherein the pattern of respective defects are discriminated to be classified into plural pattern categories by analyzing the outputs from said defect region extractor.

21. The defect inspection system of claim 15, further comprising:
(a) an address detector for determing the address of the defect by referring to the differentiated image signal;
(b) a binarizer for binarizing the differentiated image signal to output a binarized image signal composing said binarized image; and
(c) a defect region extractor for extracting a region containing the address of the detected defect from the binarized image of the inspected material by transforming the value of the picture element in the region into the value which indicates the defect; and

wherein the pattern of respective defects are discriminated to be classified into plural pattern categories by analyzing the outputs from said defect region extractor.

22. The defect inspection system of claim 16, further comprising:
(a) an address detector for determing the address of the defect by referring to the differentiated image signal;
(b) a binarizer for binarizing the differentiated image signal to output a binarized image signal composing said binarized image; and
(c) a defect region extractor for extracting a region containing the address of the detected defect from the binarized image of the inspected material by transforming the value of the picture element in the region into the value which indicates the defect; and

wherein the pattern of respective defects are discriminated to be classified into plural grade categories by analyzing the outputs from said defect region extractor.

23. The defect inspection system of claim 17, further comprising:
(a) an address detector for determing the address of the defect by referring to the differentiated image signal;
(b) a binarizer for binarizing the differentiated image signal to output a binarized image signal composing said binarized image; and
(c) a defect region extractor for extracting a region containing the address of the detected defect from the binarized image of the inspected material by transforming the value of the picture element in the region into the value which indicates the defect; and

wherein the pattern of respective defects are discriminated to be classified into plural grade categories by analyzing the outputs from said defect region extractor.

24. The defect inspection system of claim 18, further comprising:
(a) an address detector for determing the address of the defect by referring to the differentiated image signal;
(b) a binarizer for binarizing the differentiated image signal to output a binarized image signal composing said binarized image; and
(c) a defect region extractor for extracting a region containing the address of the detected defect from the binarized image of the inspected material by transforming the value of the picture element in the region into the value which indicates the defect; and

wherein the pattern of respective defects are discriminated to be classified into plural grade categories by analyzing the outputs from said defect region extractor.

## FIG.1

# FIG.2

(DIFFERENTIATED IMAGE $A_0$ )

$a_5$

| TH1 | TH2 |

TH3

COMPARATOR 44

$A_1$

CONTRACTOR 46

42 (BINARIZER)

DEFECT REGION EXTRACTOR 48 ← $A_d$ : ADDRESS OF DEFECT

50 (PATTERN MODIFIER)

EXPANSION 52

FILL-UP 54

CONTRACTION 56

$A_2$ 58

SEGMENTATION 60

DETERMINATION OF FEATURES 62

SHAPE RECOGNITION 66

GRADE RECOGNITION 68

FINAL DECISION 70

64

64

22

# FIG.3

FREQUENCY

$N(TH1)$ =TOTAL FREQUENCY)$/f(x)$

N (TH1)

0        255

↑ TH1    DENSITY

x

DISTRIBUTION
WIDTH

# FIG.4

| $d_1$ | $d_2$ | $d_3$ |
|-------|-------|-------|
| $d_4$ | $d_0$ | $d_5$ |
| $d_6$ | $d_7$ | $d_8$ |

$$TH2 = \sum_{n=0}^{8} d_n / 9$$

# FIG.5A

DENSITY

TH1

(TH1−TH2)

0

————— DIFFERENTIATED
IMAGED (A₀)

—·— TH2

# FIG.5B

DENSITY

TH1

0

—·— TH2

——— TH3

# FIG.5C

DENSITY

TH1

0

————— DIFFERENTIAED
IMAGED (A₀)

——— TH3

# FIG.6

| | $X_1$ | |
|---|---|---|
| | $X_0$ | |
| | $X_2$ | |

$$X_0' = \begin{cases} 0: \text{WHEN ANY ONE OF } X_0, X_1, X_2 \\ \qquad \text{IS ZERO} \\ 1: \text{WHEN ALL OF } X_0, X_1, X_2 \\ \qquad \text{ARE 1} \end{cases}$$

# FIG.7

(X)

⇨

(VERTICAL
CONTRACTION)

(X')

# FIG.8

|  | $X_1$ |  |
|---|---|---|
| $X_2$ | $X_0$ | $X_4$ |
|  | $X_3$ |  |

ORDER OF
SEARCHING

$X_1 \rightarrow X_2 \rightarrow X_3 \rightarrow X_4$

DEFECTED ADDRESS

DEFECT PICTURE ELEMEUTS

# FIG.9

(EXTRACTION
OF REGIONS)

■ : DEFECTED
ADDRESS

# FIG.10

(EXPANSION PROCESSING)

| $X_1$ | $X_2$ | $X_3$ |
|---|---|---|
| $X_4$ | $X_0$ | $X_5$ |
| $X_6$ | $X_7$ | $X_8$ |

$$X_0' = \begin{cases} 1 : \text{WHEN ANY ONE OF } X_0 \text{ TO } X_8 \text{ IS } 1 \\ 0 : \text{WHEN ALL OF } X_0 \text{ TO } X_8 \text{ ARE ZERO} \end{cases}$$

25

# FIG.11

(FILL-UP PROCESSING)

DEFECT

HOLE

BACKGROUND

# FIG.12

(CONTRACTION PROCESSING)

| $X_1$ | $X_2$ | $X_3$ |
|---|---|---|
| $X_4$ | $X_0$ | $X_5$ |
| $X_6$ | $X_7$ | $X_8$ |

$$X_0' = \begin{cases} 0 : \text{WHEN ANY ONE OF } X_0 \text{ TO } X_8 \text{ IS ZERO} \\ \\ 1 : \text{WHEN ALL OF } X_0 \text{ TO } X_8 \text{ ARE 1} \end{cases}$$

# FIG.13

(A)     EXPANSION     (B)     FILL-UP     (C)     CONT-RACTION     (D)

# FIG.14

# FIG.15

# FIG.16

28

# FIG.17

# FIG.18

SEGMENTATION OF $A_1$

PROJECTION OF $A_1$ ON THE X AXIS — 100

LINEARITY OF INDEPENDENT PROJECTION $P_n$ — 102

$P_x / P_y < 0.2$ — 104 — NO → $A_1 = A_1'$ — 108

YES

SEGMENTATION ALONG THE X AXIS; LET THE REMAINING AREAS BE $A_1'$ — 106

$S_1$

PROJECTION OF $A_1'$ ON THE Y AXIS — 110

LINEARITY OF INDEPENDENT PROJECTION $Q_n$ — 112

$Q_y / Q_x < 0.2$ — 114 — NO → $A_1' = A_1''$ — 120

YES

SEGMENTATION ALONG THE Y AXIS; LET THE REMAINING AREAS BE $A_1''$ — 116

$S_2$

PROJECTION OF $A_1''$ ON THE X AXIS — 122

SEGMENTATION OF EVERY INDEPENDENT PROJECTIONS — 124

$S_3$

COMPLETION OF SEGMENTATION

# FIG.19

(A)AREA     (B)MAXIMUM LENGTH     (C)WIDTH

VERTICAL FILLET DIAMETER

HORIZONTAL FILLET DIAMETER

(D)DIRECTIVITY

# FIG.20

ORIGINAL IMAGE

LOGICAL OPERATION

MASKED PLANE

31

# FIG.21

WIDTH/LENGTH

$F_{P3}$

$F_{P2}$

$F_{P1}$

0    AREA

O : DOT
△ : PLANE
✕ : LINE

# FIG.22

AREA

WIDTH/LENGTH

DOT

PLANE

LINE

INPUT LAYER    HIDDEN LAYER    OUTPUT LAYER

# FIG.23

$X_1$

$\omega_1$

$X_1$    $\omega_1$

INPUT    0    OUTPUT    $Z = f(u)$

$X_n$    $\omega_n$

$\omega_1$ : WEIGHT

$\theta$ : THRESHDD

f : OUTPUT FUNCTION

# FIG.24

$$f(u)= \frac{1}{1+\exp(-2u/u_0)}$$
$$= \frac{1}{2}\left(1+\tanh(u/u_0)\right)$$

# FIG.26

AVERAGE
DENSITY

$F_{G2}$

$F_{G1}$

AREA

○ : LIGHT

△ : MEDIAN

✕ : HEAVY

# FIG.27

OUTPUT

INPUT
LAYER

HIDDEN
LAYER

OUTPUT
LAYER

# FIG.25A

# FIG.25B

# FIG.25C

# FIG.28

MEMBERSHIP FUNCTION

# FIG.29

European Patent
Office

**EUROPEAN SEARCH REPORT**

Application Number

EP 93 10 5276

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 475 454 (FUJI PHOTO FILM)<br>* page 10, line 46 - page 12, line 27;<br>claim 19; figure 10 *<br>--- | 1 | G01N21/89 |
| A | US-A-4 541 011 (MAYER ET AL.)<br>* abstract; claim 1 *<br>--- | 1 | |
| P,A | EP-A-0 519 255 (FUJI PHOTO FILM)<br>* abstract; claims 1,9 *<br>--- | 1,3,4 | |
| A | PATENT ABSTRACTS OF JAPAN<br>vol. 9, no. 101 (P-353)(1824) 2 May 1985<br>& JP-A-59 226 853 ( DAIDO TOKUSHUKO ) 20<br>December 1984<br>* abstract *<br>--- | 9 | |
| A | EP-A-0 315 697 (NIPPON SHEET GLASS)<br>* abstract; claim 1 *<br>----- | 13,16 | |
| | | | **TECHNICAL FIELDS SEARCHED (Int. Cl.5)**<br><br>G01N |

The present search report has been drawn up for all claims

| Place of search | Date of completion of the search | Examiner |
|---|---|---|
| THE HAGUE | 14 JULY 1993 | KRAMETZ E.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)